(19) Europäisches Patentamt

European Patent Office

Office européen des brevets

(11) Veröffentlichungsnummer: **0 319 739 B1**

(12) **EUROPÄISCHE PATENTSCHRIFT**

(45) Veröffentlichungstag der Patentschrift: **11.03.92**

(51) Int. Cl.5: **H01M 2/04**, H01M 6/08

(21) Anmeldenummer: **88118929.4**

(22) Anmeldetag: **14.11.88**

(54) **Kunststoffdichtungselement für galvanische Primärelemente.**

(30) Priorität: **11.12.87 DE 3742026**

(43) Veröffentlichungstag der Anmeldung:
**14.06.89 Patentblatt 89/24**

(45) Bekanntmachung des Hinweises auf die
Patenterteilung:
**11.03.92 Patentblatt 92/11**

(84) Benannte Vertragsstaaten:
**BE CH DE ES FR GB GR IT LI NL SE**

(56) Entgegenhaltungen:
EP-A- 0 081 201       DE-A- 1 937 605
DE-U- 1 921 573       FR-A- 1 379 397
FR-A- 2 195 074       FR-A- 2 349 966
US-A- 3 524 770

PATENT ABSTRACTS OF JAPAN, Band 8, Nr.
194 (E-264)[1631], 6. September 1984; & JP-
A-59 81 864 (NIHON KURAUNKORUKU K.K.)
11-05-1984

PATENT ABSTRACTS OF JAPAN, Band 6, Nr.
254 (E-148)[1132], 14. Dezember 1982; & JP-
A-57 154 762 (HITACHI MAXELL K.K.)
24-09-1982

PATENT ABSTRACTS OF JAPAN, Band 9, Nr.

150 (E-324)[1873], 25. Juni 1985; & JP-A-60 32
246 (TOSHIBA DENCHI K.K.) 19-02-1985

PATENT ABSTRACTS OF JAPAN, Band 9, Nr.
99 (E-311)[1822], 27. April 1985; & JP-A-59 224
047 (HITACHI MAXELL K.K.) 15-12-1984

(73) Patentinhaber: **VARTA Batterie Aktiengesellschaft
Am Leineufer 51
W-3000 Hannover 21(DE)**

(72) Erfinder: **Rüggeberg, Klaus, Ing. grad.
Einsteinstrasse 21
W-7090 Ellwangen(DE)**
Erfinder: **Jose, Horst-Udo, Dipl.-Ing.
Bachstrasse 12
W-7188 Fichtenau-Unterdeufstetten(DE)**

(74) Vertreter: **Kaiser, Dieter Ralf, Dipl.-Ing.
Gundelhardtstrasse 72 Postfach 16 20
W-6233 Kelkheim/Ts.(DE)**

EP 0 319 739 B1

**Beschreibung**

Die Erfindung betrifft ein Kunststoffdichtungselement für galvanische Primärelemente in Rundzellenform mit einer metallischen Ummantelung, welches eine zentrale Durchführungsöffnung für den Kohlestableiter besitzt und ein Verfahren zu seiner Herstellung.

Für galvanische Primärelemente vom Leclanché-Typ sind Abdichtungen von vielfältiger Art in Gebrauch, die sich jedoch zu einem großen Teil auf scheibenförmige oder tellerartig geformte Kunststoffkörper als dem wesentlichen Bestandteil der jeweiligen Dichtungsanordnung zurückführen lassen. Ein solches Dichtungselement besitzt in der Regel eine zentrale Öffnung, durch welche der Kohlestableiter hindurchgeführt ist, und verschließt den Zinkbecher beispielsweise gemäß DE-PS 26 19 178 wie ein Pfropfen. Nach der DE-AS 19 37 605 hat das Dichtungselement im wesentlichen die Form einer hohlen Verschlußkappe, welche einerseits den Kohlestab an ihrer zentralen Öffnung manschettenartig umschließt und andererseits mit einem sich abwärts erstreckenden Außenrand an der Innenwand des Zinkbechers anliegt. Oberhalb dieser Berührungszonen ist die Verschlußkappe jedoch vom Kohlestab sowie vom Zinkbecher, bevor dessen Rand bis zum Ergreifen der Verschlußkappe umgebördelt ist, durch umlaufende Hohlräume getrennt, welche mit einer Dichtmasse ausgefüllt werden müssen. Die Schaffung größerer Dichtflächen, die ein mögliches Elektrolytkriechen aus dem Zellinnern heraus erschweren, wird hier durch eine umständliche Maßnahme erkauft.

Eine Zellenabdichtung von wesentlich einfacherem Aufbau ist durch das deutsche Gebrauchsmuster 19 21 573 bekannt. Sie besteht lediglich aus einer Ringscheibe aus Gummi, die einem Kunststoffdeckel für den Elektrodenbecher aufliegt, und einem Gummiring vom gleichen Außendurchmesser wie die Ringscheibe. Bei der Montage wird die metallische Pluskappe mit ihrem unteren flanschartigen Rand auf die Ringscheibe aufgesetzt und darauf der Gummiring dem flanschartigen Rand aufgelegt. Der durch das anschließende Umbördeln des metallischen Gehäusemantels erzeugte Druck führt zu einer leichten Verformung der gummielastischen Dichtungsteile, wobei insbesondere die Ringscheibe in den Raum zwischen Gehäusemantel und Außenumfang des flanschartigen Randes der Pluskappe gedrängt wird. Auf diese Weise wird die Elektrolyt-Abdichtung gegen das Gehäuse zwar verbessert, nicht aber gegen den Kohlestab, da die schmale Dichtzone zwischen diesem und der Ringscheibe, insbesondere mit Rücksicht auf das poröse Kohlematerial, nur ein bedingtes Hindernis für einen Elektrolytaustritt darstellt und bei dieser bekannten Dichtungsanordnung die Möglichkeit, daß etwas Elektrolyt in den vom haubenförmigen Mittelteil der Kappe und der Ringscheibe begrenzten Hohlraum eindringt und dort aufgefangen wird, sogar als durchaus gegeben hingenommen wird.

Der Erfindung liegt die Aufgabe zugrunde, ein Kunststoffdichtungselement für Trockenbatterien verfügbar zu machen, welches möglichst einfach gestaltet ist, sich rasch montieren läßt und ein Austreten von Elektrolyt oder von Wasserdampf, der zur Austrocknung der Zelle führen kann, von der Seite des Kohlestableiters her ebenso sicher wie im Bereich der Gehäusewand verhindert.

Diese Aufgabe wird mit den im kennzeichnenden Teil des Anspruchs 1 angegebenen Maßnahmen gelöst. In den Unteransprüchen sind bevorzugte Ausführungsformen des Dichtungselements und ein Verfahren zu seiner Herstellung angegeben.

Anhand zweier Figuren wird die Erfindung im folgenden näher erläutert.

Figur 1 zeigt ein Kunststoffdichtungselement gemäß der Erfindung vor dem Zusammenbau mit einer metallischen Pluskappe.

Figur 2 zeigt eine mit dem erfindungsgemäßen Dichtungselement hergestellte Trockenbatterie.

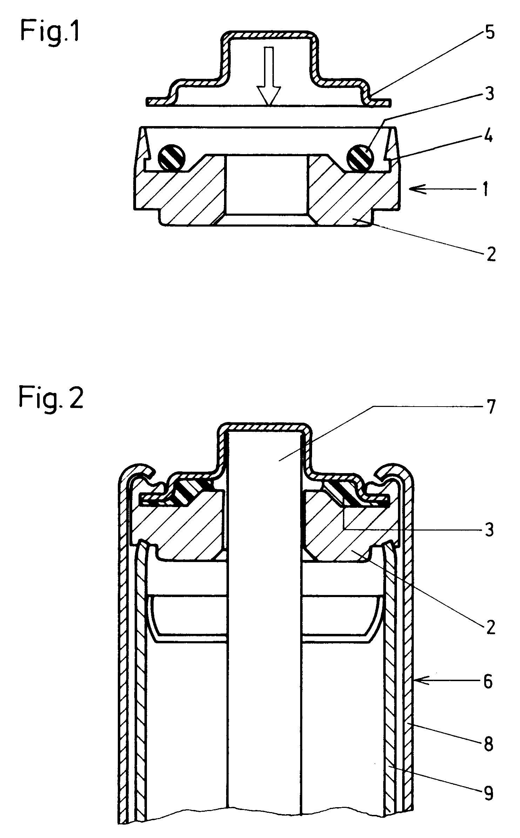

Gemäß Figur 1 ist das erfindungsgemäße Abdichtungselement 1 ein rotationssymmetrischer, im wesentlichen einer Lochscheibe ähnelnder Körper 2 aus säurebeständigem Kunststoff, der jedoch einen hochgezogenen Rand besitzt und auf dessen Oberseite, die zwischen dem hochgezogenen Rand und einer konisch aufsteigenden Querschnittsverdickung der Scheibe um die Zentralöffnung herum eine umlaufende wannenförmige Vertiefung mit flachem Boden bildet, ein weichelastisches Kunststoffmaterial 3 in der Form eines Ringwulstes aufgespritzt ist. Der Außendurchmesser des hochgezogenen Randes kann dem Innendurchmesser des Metallmantels 8 (vgl. Figur 2) zumindest nahekommen, so daß sich ein guter Paßsitz in dem letzteren ergibt.

Während das scheibenförmige Hauptteil des Abdichtungselements aus einem relativ harten, jedoch für Dichtungszwecke durchaus üblichen Kunststoffmaterial besteht, ist erfindungsgemäß für die ringförmige Aufspritzung ein besonders weicher Kunststoff aus der Gruppe der Elastomere vorgesehen.

Erfindungsgemäß ausgewählte Kunststoffe sollten bis ca. 50°C formstabil und selbstverständlich bis zu weit höheren Temperaturen korrosionsbeständig sein. Sie sollten sowohl in der Kälte wie in der Wärme durch extreme Verformbarkeit ausgezeichnet sein und ein gutes Adhäsionsvermögen sowohl an anderen Kunststoffen als auch an Metallen aufweisen, andererseits aber auch hydrophob sein. Günstig sind daher elastomere Klebstoffe wie beispielsweise die klebrigen Acrylharze, die nicht nur befähigt sind, sich engen Verschlußspalten anzupassen, sondern auch die makroskopischen Unebenheiten der abzudichtenden Oberflächen, bestehend aus feinen Rissen, Spalten, Poren und dergl. auszufüllen.

Ein elastomeres Kunststoffmaterial, welches die erfindungsgemäß geforderten Qualitäten optimal erfüllt, wurde in einem Copolymer aus Ethylen und Vinylacetat (EVA) gefunden. Daneben kommen aber auch die ebenfalls aus der Gruppe der Elastomere stammenden Ethylenacrylate (EAM), von diesen insbesondere das Ethylenbutylacrylat, sowie das Ethylentetrafluor-Ethylen-Chopolymer (ETFE) infrage.

Die Aufbringung des Elastomers auf den "härteren" Grundkörper geschieht durch Extrudieren aus einer feinen Düse, während der Grundkörper unter der Düse mit hoher Geschwindigkeit rotiert. Dabei legt sich während einer getakteten kurzen Druckzeit, in welcher ein Nadelventil die Düse öffnet, ein dünner Strang des ausfließenden Kunststoffs in mehreren Windungen in die wannenartige, umlaufende Vertiefung des Grundkörpers und hinterläßt dort, indem die einzelnen Windungen ineinanderfließen, einen gleichmäßigen, an der harten Kunststoffunterlage adhärierenden Ringwulst.

Bei der Montage einer Trockenbatterie unter Verwendung der erfindungsgemäßen Abdichtungselementes werden dieses und die metallische Pluskappe 5 vormontiert, was durch einfaches Einfügen der Pluskappe in den Kunststoffkörper im Sinne des Pfeils in Figur 2 geschieht. Die Pluskappe wird dabei soweit eingedrückt, bis ihr flanschartiger Rand unter die Schnappkante 4, welche dem hochstehenden Rand des Kunststoffkörpers vorzugsweise angeformt ist, einrastet. Die elastomere Auftragung wird dadurch bereits weitgehend verformt.

Das aus dem Dichtungselement und der Pluskappe bzw. dem metallischen Gehäusedeckel 5 vorgefertigte Bauteil wird darauf in die Gehäuseöffnung der bereits mit Aktivmaterial und Elektrolyt gefüllten Trockenbatterie 6 mit Zentrierungshilfe durch den Kohlestab 7 eingesetzt, und der hochstehende Rand des Kunststoffkörpers wird gemeinsam mit dem Rand des Metallmantels 8 über dem Rand der Pluskappe eingebördelt. Durch den Bördeldruck schneidet der Rand des Zinkbechers 9 ein wenig in die Unterseite des Kunststoffkörpers ein, während das elastomere Material 3 nunmehr vollends zwischen der ursprünglichen Auftragungsfläche und der Pluskappe zusammengepreßt und dabei in Richtung zum Kohlestab verdrängt wird.

Der Zustand der erfindungsgemäßen Dichtungselements in der fertigen Zelle ist in Figur 2 dargestellt. Die besonders vorteilhafte Wirkung der erzielten Abdichtung liegt im wesentlichen darin begründet, daß das ringförmig aufgespritzte elastomere Kunststoffmaterial dank seiner extremen Verformbarkeit durch Flachpressen auf einen sehr geringen Dichtungsquerschnitt gebracht worden ist, während gleichzeitig die Berührungsflächen mit dem Grundkörper und der Pluskappe unverhältnismäßig groß sind. Dadurch stellt die Dichtmasse eine zuverlässige Wasserdampfsperre dar und verhindert ebenso aufgrund der extrem langen Kriechwege entlang den eben genannten Berührungsflächen einen Elektrolytaustritt. Wäre die auf die elastomere Anspritzung des erfindungsgemäßen Abdichtungselements zurückgehende Dichtungszone nicht vorhanden, so wären Feuchtigkeitsaustritte aus dem Bereich der Umbördelung wegen der Wasserdampfdurchlässigkeit des Kohlestabes unvermeidbar.

Das erfindungsgemäße Abdichtungselement erfüllt somit die gestellte Aufgabe in hohem Maße, indem mit seiner Hilfe eine Trockenbatterie herstellbar ist, bei welcher aller Wasserdampf, der sonst über den porösen Kohlestab nach draußen diffundiert oder permeiert, in der Dichtungszone abgefangen wird.

Einen Qualitätsbeweis für das erfindungsgemäße Dichtungselement lieferten Spannungsmessungen an Zellen, die einer dreimonatigen Tropenlagerung unterworfen gewesen waren, wobei bei einem Teil der Versuchszellen der elastomere Bestandteil an den eingesetzten Dichtungen fehlte. Während sich bei den erfindungsgemäß abgedichteten Zellen nach der Lagerung die gleichen Sollwerte für die Ruhespannung und für eine belastete Spannung wie bei frischen Zellen ohne nennenswerte Fehlerstreuung ergaben, wurden an den Vergleichszellen sehr unterschiedliche, nach unten tendierende Spannungswerte gemessen, deren Ursache mangelnde Abdichtung zwischen dem Kohlestab und dem äußeren Metallmantel ist, die zu Elektrolyt- und/oder Wasserdampf-Austritt führt.

**Patentansprüche**

1. Kunststoffdichtungselement für galvanisches Primärelement in Rundzellenform mit einer metallischen Ummantelung, welches eine zentrale Durchführungsöffnung für den Kohlestabableiter besitzt, dadurch gekennzeichnet, daß es aus einem rotationssymmetrischen Kunststoffkörper (2) mit hochgezogenem Rand besteht, dessen Oberseite eine umlaufende, durch den hochgezogenen Rand nach außen begrenzte, wannenförmige Vertiefung aufweist, auf deren flachen Boden ein elastomeres Kunststoffmaterial (3) als geschlossener Ringwulst aufgespritzt ist.

2. Kunststoffdichtungselement nach Anspruch 1, dadurch gekennzeichnet, daß dem hochgezogenen Rand des rotationssymmetrischen Kunststoffkörpers an seiner Innenseite eine umlaufende Schnappkante (4) angeformt ist.

3. Kunststoffdichtungselement nach den Ansprüchen 1 oder 2, dadurch gekennzeichnet, daß das elastomere Kunststoffmaterial ein Ethylen-Vinylacetat-Copolymer (EVA) ist.

4. Verfahren zur Herstellung eines galvanischen Elements in Rundzellenform unter Verwendung eines Kunststoffdichtungselements nach einem der Ansprüche 1 bis 3, dadurch gekennzeichnet, daß der metallische Gehäusedeckel des Elements von oben in den Kunststoffkörper mit inliegendem elastomeren Ring eingefügt wird, bis sein Rand unter die Schnappkante am hochstehenden Rand des Kunststoffkörpers einrastet, daß die so vormontierten Teile in die Gehäuseöffnung der bereits mit Aktivmaterial und Elektrolyt gefüllten Zelle mit zentrierender Hilfe durch den Kohlestab eingesetzt werden, bis der Kunststoffkörper auf dem Rand des Zinkbechers aufliegt, und daß die über den Deckelrand hinausstehenden Ränder des Kunststoffkörpers und des Metallmantels nach innen unter Flachpressung des zwischen Metalldeckel und Kunststoffkörper eingeschlossenen elastomeren Ringwulstes eingebördelt werden.

## Claims

1. Plastics sealing element for galvanic primary element, in the form of a round cell having a metal casing, which plastics sealing element has a central through-guide opening for the carbon rod current collector, characterized in that it comprises a rotationally symmetrical plastics body (2) with a raised edge, the upper side of which has a peripheral trough-shaped depression outwardly delimited by the raised edge, an elastomeric plastics material (3) being injection moulded onto the flat base of the projection as a closed annular bead.

2. Plastics sealing element according to Claim 1, characterized in that a peripheral snap-on edge (4) is integrally formed with the raised edge of the rotationally symmetrical plastics body on its inside.

3. Plastics sealing element according Co Claims 1 or 2, characterized in that the elastomeric plastics material is an ethylene vinyl acetate copolymer (EVA).

4. Process for manufacturing a galvanic element in the form of a round cell, using a plastics sealing element according to one of Claims 1 to 3, characterized in that the metal housing cover of the element is inserted from above into the plastics body, with elastomeric ring inside, until its edge latches under the snap-on edge on the raised edge of the plastics body, in that the thus pre-assembled parts are inserted into the housing opening of the cell, which is already filled with active material and electrolyte, with the carbon rod forming a centring aid, until the plastics body bears upon the edge of the zinc cup, and in that the edges of the plastics body and of the metal casing, projecting over the cover edge, are turned inwards with flat pressing of the elastomeric annular bead enclosed between the metal cover and the plastics body.

## Revendications

1. Elément d'étanchéité en matière synthétique pour élément primaire galvanique en forme de pile ronde avec une enveloppe métallique qui possède un orifice de passage central pour le conducteur en barreau de charbon, caractérisé en ce qu'il consiste en un corps de révolution symétrique en matière synthétique (2) à bord relevé dont la face supérieure présente un renfoncement entourant en Forme de cuvette, limité vers l'extérieur par le bord relevé et sur le fond plat duquel une matière élastomère en substance synthétique (3) est appliquée par projection sous forme de boudin torique fermé.

2. Elément d'étanchéité en matière synthétique selon la revendication 1, caractérisé en ce qu'un rebord à déclic (4) entourant est façonné sur le bord relevé du corps de révolution symétrique en matière synthétique sur sa face interne.

3. Elément d'étanchéité en matière synthétique selon les revendications 1 ou 2, caractérisé en ce que la matière élastomère en substance synthétique est un copolymère d'éthylène et d'acétate de vinyle (EVA).

4. Procédé de fabrication d'un élément galvanique sous forme de pile ronde avec utilisation d'un élément d'étanchéité en matière synthétique selon l'une des revendications 1 à 3, caractérisé en ce que le couvercle de boîtier métallique de l'élément est inséré d'en haut dans le corps de matière synthétique avec anneau élastomère placé dans celui-ci jusqu'à ce que son bord s'enclenche sous le rebord à déclic sur le bord relevé du corps de matière synthétique, en ce que les parties ainsi préalablement montées sont introduites dans l'ouverture de boîtier de la pile déjà remplie de matière active et d'électrolyte, avec l'aide centrante par le bâtonnet de charbon jusqu'à ce que le corps de matière synthétique repose sur le bord du boîtier de zinc et en ce que les bords, dépassant au-dessus du bord de couvercle, du corps de matière synthétique et de l'enveloppe métallique, sont rabattus vers l'intérieur avec pressage d'aplatissement du boudin torique élastomère enfermé entre le couvercle métallique et le corps de matière synthétique.

Fig.1

Fig. 2